# EUROPEAN PATENT APPLICATION

(11) **EP 1 211 778 A2**
(43) Date of publication of application: **05.06.2002**
(21) Application number: 01111458.4
(22) Date of filing: 10.05.2001
(51) Int. Cl.: H02K 1/17

(54) **Magnet holder for starter motor**

(30) Priority: 30.11.2000 KR 2000071882
(71) Applicant: Valeo Mando Electrical Systems Korea Limited, Kyongju-si, Kyongsangbuk-do (KR)
(72) Inventor: Lee, Sae-Hwan, Kyongju-si, Kyongsanbuk-do 780-140 (KR); Ahn, Sang-Hyuk, Kyongju-si, Kyongsanbuk-do 780-140 (KR)
(74) Representative: TER MEER STEINMEISTER & PARTNER GbR

(57) **Abstract**

The present invention relates to a magnet holder for a starter motor which includes one end rolled in an inner surface of a yoke housing and the other end inserted between a magnet (2) and a shunt (3) for thereby being fixed together with a magnet without welding a shunt to a yoke housing. The magnet holder for a starter motor includes a bend formation portion (110) disposed based on a rolled shape in an inner surface of a yoke housing (1) by a certain width, and a holder member (120) arranged in such a manner that the shunt (3) and magnet (2) are closely contacted at one side of the bend formation portion (110) for supporting a plurality of the same at a certain interval and deployed in a circumferential direction for preventing the shunt (3) and magnet (2) from being moved in an axial direction of the yoke housing (1) in a magnet fixing holder for a starter motor installed in an inner surface of a yoke housing and closely fixing a magnet to a shunt.

## Description

### BACKGROUND OF THE INVENTION

### 1. Field of the Invention

The present invention relates to a magnet holder for a starter motor, and in particular to a magnet holder for a starter motor which is fixed together with a magnet without welding a shunt to a yoke housing.

### 2. Description of the Background Art

Generally, an armature and a field unit are installed in a yoke housing for driving an engine by rotating a pinion in a starter motor installed for an engine operation of a vehicle. As the armature is rotated, the pinion is driven based on a magnetic operation of the same. Therefore, the pinion rotates a ring gear of the engine for thereby driving the engine.

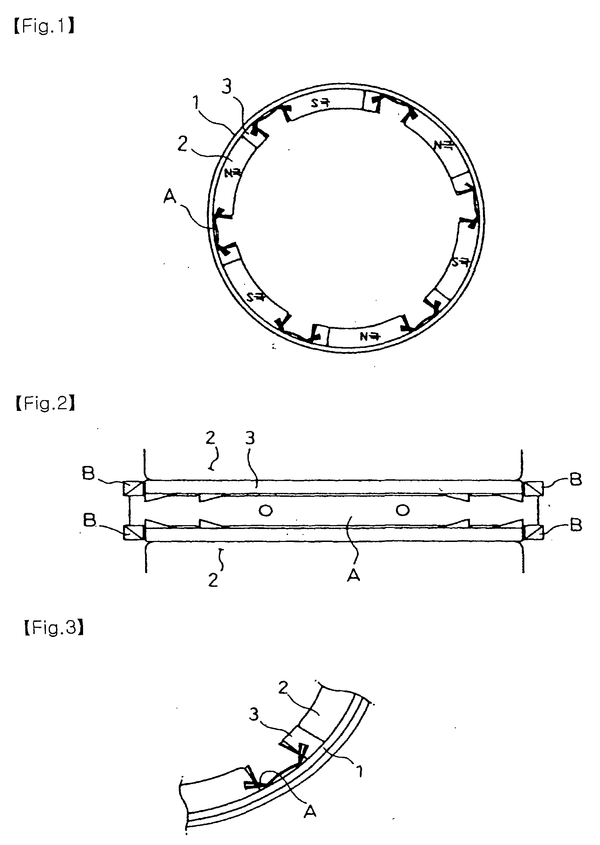

Recently, a magnet type starter motor is installed in a yoke housing in such a manner that a magnet surrounds an outer portion of the armature without installing a field coil in the yoke housing. The magnet is stably fixed in the yoke housing by a certain member. As shown in Figures 1 through 3, a shunt 3(or pole) is installed in an inner surface of the yoke housing 1 in the magnetic force direction of the magnet 2, and a holder A is installed between the pole 3 and the magnet 2. A pair of opposite engaging portions B are installed at both ends of the holder. In a state that the holder A is installed between the pole 3 and the magnet 2, the engaging portion B is bent in the circumferential direction for thereby fixing the magnet 2.

When fixing the magnet 2, the shunt 3 and the holder A in the yoke housing 1 which form the starter motor, the shunts 3 are installed in the inner surface of the yoke housing 1 at a certain interval. In this case, the shunts 3 are installed in the inner surface of the yoke housing 1 by a welding method. Since the welding method is used at an initial stage, the productivity is decreased, and the fabrication cost and quality are decreased.

### SUMMARY OF THE INVENTION

Accordingly, it is an object of the present invention to provide a magnet holder for a starter motor which includes one end rolled in an inner surface of a yoke housing and the other end inserted between a magnet and a shunt for thereby being fixed together with a magnet without welding a shunt to a yoke housing.

To achieve the above objects, there is provided a magnet holder for a starter motor which includes a bend formation portion disposed based on a rolled shape in an inner surface of a yoke housing by a certain width, and a holder member arranged in such a manner that the shunt and magnet are closely contacted at one side of the bend formation portion for supporting a plurality of the same at a certain interval and deployed in a circumferential direction for preventing the shunt and magnet from being moved in an axial direction of the yoke housing in a magnet fixing holder for a starter motor installed in an inner surface of a yoke housing and closely fixing a magnet to a shunt.

### BRIEF DESCRIPTION OF THE DRAWINGS

The present invention will become better understood with reference to the accompanying drawings which are given only by way of illustration and thus are not limitative of the present invention, wherein:
Figure 1 is a vertical cross-sectional view illustrating an installation state of a conventional magnet holder for a starter motor;
Figure 2 is a plan view illustrating an installation state of a conventional magnet holder for a starter motor;
Figure 3 is a view for describing an installation state of a conventional magnet holder for a starter motor;
Figure 4 is a plan view illustrating a magnet fixing holder for a starter motor according to the present invention;
Figure 5 is a detailed bottom view in the direction A of Figure 4;
Figure 6 is a side view in the direction B of Figure 5; and
Figure 7 is a partial perspective view for describing a magnet fixing holder for a starter motor according to the present invention.

### DETAILED DESCRIPTION OF THE PREFERRED EMBODIMENTS

The embodiments of the present invention will be explained with reference to the accompanying drawings.

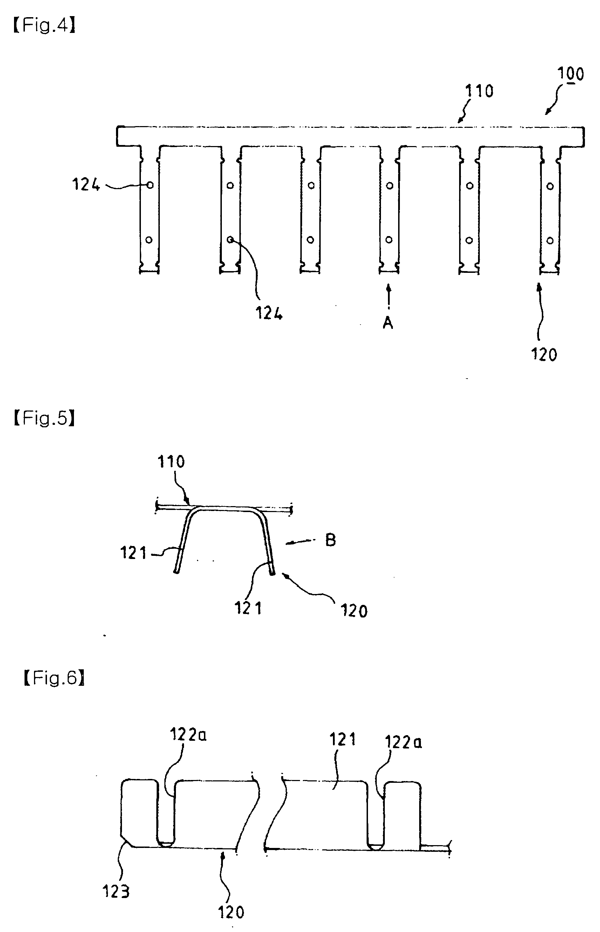

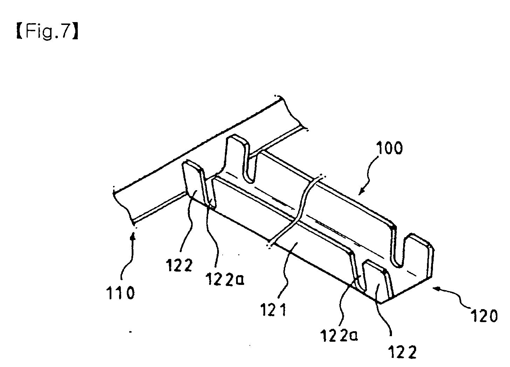

Figure 4 is a plan view illustrating a magnet fixing holder for a starter motor according to the present invention, Figure 5 is a detailed bottom view in the direction A of Figure 4, Figure 6 is a side view in the direction B of Figure 5, and Figure 7 is a partial perspective view for describing a magnet fixing holder for a starter motor according to the present invention.

In a magnet fixing holder for a starter motor installed in an inner surface of a yoke housing 1 and closely fixing a magnet 2 to a shunt 3, a magnet fixing holder for a starter motor includes a bend formation portion 110 disposed based on a rolled shape in an inner surface of a yoke housing 1 by a certain width, and a holder member 120 arranged in such a manner that the shunt 3 and magnet 2 are closely contacted at one side of the bend formation portion 110 for supporting a plurality of the same at a certain interval and deployed in a circumferential direction for preventing the shunt 3 and magnet 2 from being moved in an axial direction of the yoke housing 1.

The holder member 120 is extended from one side of the band formation member 110 and is formed in a reversed U shape. A support wall 121 is provided for supporting the side surfaces of the shunt 3 and the magnet 2. A deployment portion 122 is formed at both ends of the support wall 121 for limiting an axial direction movement of the shunt 3 and the magnet 2 by implementing an easily deployment in the circumferential direction.

In addition, as shown in Figure 3, a cut portion 123 is formed at a lower portion of the deployment portion 122 formed at a free end of the holder member 120 for an easier deployment.

A hole 124 is formed in a bottom surface of the holder portion 120 for fixing to the yoke housing 1 using a rivet.

Therefore, a bend formation portion 110 of the holder 100 is rolled in a circle shape and is received in an inner surface of the yoke housing 1, and the shunt 3 and magnet 2 are disposed between the holder member 120 and the support wall 121 of the holder member 120, and the deployment portion is deployed for thereby preventing an axial direction movement of the shunt 3 and the magnet 2.

The construction of the yoke assembly formed of the yoke housing 1, the magnet 2, the shunt 3 and the holder 1090 is simplified for thereby decreasing a certain cost required for a welding operation, whereby it is possible to enhance the productivity and to decrease the fabrication cost.

The fabrication process is simplified, and it is possible to fabricate a yoke assembly at a lower cost.

As described above, in the present invention, it is possible to fix together with the magnet without welding the shunt to the yoke housing. Therefore, it is possible to enhance the productivity and decrease the fabrication cost. Furthermore, it is possible to fabricate a high quality yoke assembly.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. In a magnet fixing holder for a starter motor installed in an inner surface of a yoke housing and closely fixing a magnet to a shunt, a magnet fixing holder for a starter motor, comprising:
a bend formation portion disposed based on a rolled shape in an inner surface of a yoke housing by a certain width; and
a holder member arranged in such a manner that the shunt and magnet are closely contacted at one side of the bend formation portion for supporting a plurality of the same at a certain interval and deployed in a circumferential direction for preventing the shunt and magnet from being moved in an axial direction of the yoke housing.

2. The holder of claim 1, wherein said holder member includes a support wall extended from one side of the bend formation portion for supporting the side surfaces of the shunt and magnet, and a deployment portion formed at both ends f the support wall for limiting an axial direction movement of the shunt and magnet for thereby implementing a deployment in an axial direction.

3. The holder of claim 1, wherein a cut portion is formed at a lower portion of the deployment portion formed at a free end of the holder member for implementing an easier deployment.
